# EUROPÄISCHE PATENTANMELDUNG

(11) **EP 1 482 645 A1**
(43) Veröffentlichungstag der Anmeldung: **01.12.2004**
(21) Anmeldenummer: 04101547.0
(22) Anmeldetag: 15.04.2004
(51) Int. Cl.: H04B 1/08

(54) **Bedienelement zur Steuerung einer Speicherung von Audiodaten in einem Autoradio**

(30) Priorität: 28.05.2003 DE 10324620
(71) Anmelder: ROBERT BOSCH GMBH, 70442 Stuttgart (DE)
(72) Erfinder: Bertram, Gerold, 30459, Hannover (DE); Pensohorn, Gerd, 31234, Edemissen (DE)

(57) **Zusammenfassung**

Es wird ein Bedienelement zur Steuerung einer Speicherung von Audiodaten in einem Fahrzeug vorgeschlagen, wobei die Audiodaten in einem Speicher eines Autoradios abgelegt werden. Das Bedienelement ist an einem Lenkrad des Fahrzeugs angeordnet, insbesondere an einer dort vorgesehenen Bedieneinheit, so dass ein Fahrer das Bedienelement leicht bedienen kann.

## Beschreibung

### Stand der Technik

Die Erfindung geht aus von einem Bedienelement nach der Gattung des Hauptanspruchs. Aus der DE 196 40 140 A1 ist bereits ein Rundfunkempfänger mit einer Aufzeichnungseinheit für Audiodaten bekannt. Der Rundfunkempfänger ist als ein Autoradio ausgeführt, das ein abnehmbares Bedienteil aufweist. An dem Bedienteil ist eine Aufnahmetaste vorgesehen, nach deren Betätigung ein Mikrofon ein an dem Mikrofon anstehendes Audiosignal in einen Zwischenspeicher einer Aufzeichnungseinheit einschreibt. Das Bedienteil kann abgenommen werden, so dass es beispielsweise als ein Diktiergerät benutzt wird. Für die Benutzung während der Fahrt ist es jedoch erforderlich, das Bedienteil auf das Autoradio aufzusetzen und die an der Frontseite des Bedienteils angeordnete Aufnahmetaste zu betätigen, wenn eine Aufnahme gewünscht wird.

### Vorteile der Erfindung

Das erfindungsgemäße Bedienelement mit den Merkmalen des Hauptanspruchs hat demgegenüber den Vorteil, dass das Bedienelement, mit dem eine Speicherung von Audiodaten gesteuert wird, an einem Lenkrad des Fahrzeugs angeordnet ist. Somit ist ein Umgreifen des Fahrers von dem Lenkrad zu dem Autoradio nicht mehr erforderlich. Er kann die Hände am Lenkrad belassen und muss nicht die an dem Autoradio angeordnete Aufnahmetaste betätigen, um während der Fahrt eine Aufnahme zu starten oder zu beenden. Da der Fahrer die Hände nicht vom Lenkrad lösen muss, ist zudem eine schnellere Reaktion und damit auch ein schnellerer Start einer gewünschten Aufnahme möglich.

Durch die in den Unteransprüchen aufgeführten Maßnahmen sind vorteilhafte Weiterbildungen und Verbesserungen des im Hauptanspruch angegeben Bedienelements möglich. Besonders vorteilhaft ist, mit einer Betätigung des Bedienelements Audiodaten eines empfangenen Radioprogramms in einem Speicher abzulegen. Hierdurch kann ein Benutzer Informationen und/oder Musikstücke, die ihm gefallen, bequem aufzuzeichnen. Ferner ist es vorteilhaft, dass der Fahrer mit dem Bedienelement von ihm gesprochenen Text aufzeichnen kann. Hierdurch können Nachrichten oder z.B. Telefonnummern bequem gespeichert werden.

Eine besonders einfache Bedienung wird erreicht, wenn durch dasselbe Bedienelement sowohl eine Speicherung gestartet, als auch bei einer nachfolgenden Betätigung wieder beendet werden kann.

Es ist weiterhin vorteilhaft, das Bedienelement in eine von dem Lenkrad abnehmbare Bedieneinheit zu integrieren, die in einer vorteilhaften Ausgestaltung als eine Fernbedienung des Autoradios ausgeführt ist. Mit der Fernbedienung wird es gegebenenfalls auch einem Beifahrer ermöglicht, das Autoradio entsprechend zu steuern. Ferner kann die abnehmbare Bedieneinheit von dem Lenkrad abgenommen werden, wenn die Funktionen der Bedieneinheit nicht benötigt werden. Zudem ist bei einer abnehmbaren Gestaltung gegebenenfalls ein nachträglicher Einbau in ein Fahrzeug möglich, bei dem ein erfindungsgemäßes Bedienelement nicht bereits werksseitig in das Lenkrad des Fahrzeugs eingebracht ist.

### Zeichnung

Ausführungsbeispiele der Erfmdung sind in der Zeichnung dargestellt und in der nachfolgenden Beschreibung näher erläutert. Es zeigen
Figur 1 ein erfindungsgemäßes Bedienelement in Zusammenwirkung mit einem Autoradio in einem Kraftfahrzeug,
Figur 2 eine Anordnung einer erfindungsgemäßen Bedieneinheit mit einem erfindungsgemäßen Bedienelement an einem Lenkrad.

### Beschreibung des Ausführungsbeispiels

Die erfindungsgemäße Bedieneinheit und das erfindungsgemäße Bedienelement können in beliebigen Fahrzeugen eingesetzt werden. Besonders vorteilhaft ist ihre Verwendung in Kraftfahrzeugen, bei denen im Allgemeinen ein Radioprogramm nicht nur der Unterhaltung des Fahrers dient, sondern auch wichtige Informationen für die Fahrt überträgt, so z.B. Wettermeldungen oder Verkehrsmeldungen. Im Folgenden ist die Verwendung eines erfindungsgemäßen Bedienelements am Beispiel eines Autoradios in einem Kraftfahrzeug erläutert.

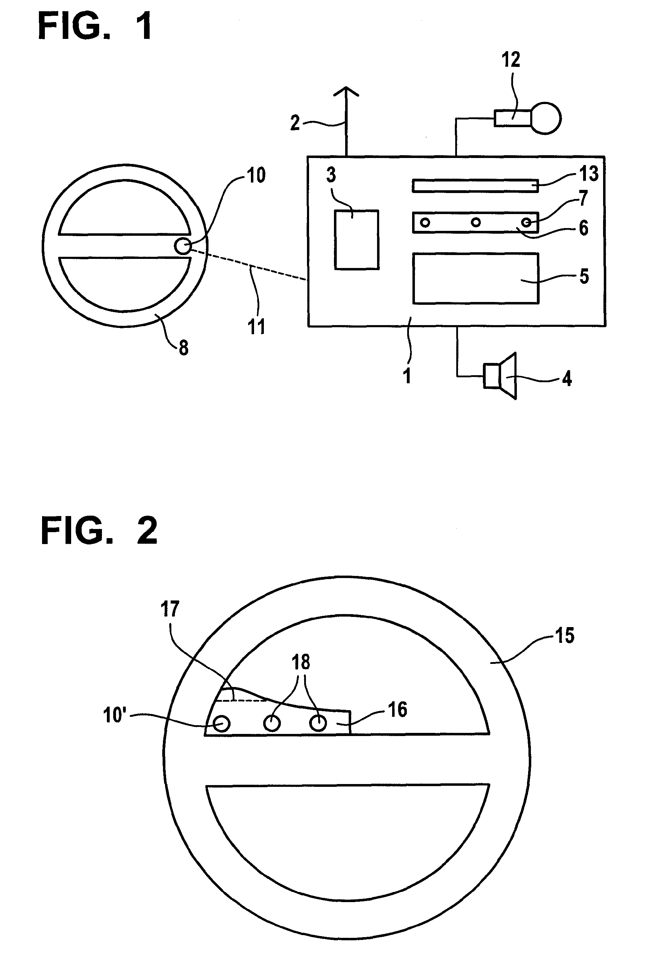

In der Figur 1 ist ein Autoradio 1 schematisch dargestellt, das in einem Kraftfahrzeug angeordnet ist. Das Autoradio 1 ist mit einer Antennevorrichtung 2 zum Empfang eines Rundfunkprogramms verbunden. Das Autoradio 1 weist eine Tunervorrichtung 3 auf, die der Umsetzung des Antennensignals in ein Audiosignal dient. Das Audiosignal wird über einen Lautsprecher 4 an den Fahrer des Fahrzeugs ausgegeben. Das Autoradio 1 weist zudem eine Bedieneinheit 6 auf, die mit Bedienelementen 7 ausgestattet ist. Die Bedieneinheit 6 dient dazu, das Autoradio 1 ein- und auszuschalten sowie eine Senderwahl durchzuführen. Gegebenenfalls wirkt die Bedieneinheit 6 mit einer in der Figur 1 nicht dargestellten Anzeige des Autoradios 1 zusammen. Das Autoradio 1 weist ferner einen nichtflüchtigen, überschreibbaren Speicher 5 auf, auf dem Audiodaten gespeichert werden können (Audiospeicher). In einem ersten Ausführungsbeispiel ist der Audiospeicher 5 als eine Speicherkarte ausgeführt. In einer weiteren Ausführungsform kann der Audiospeicher 5 auch als ein Festplattenlaufwerk ausgeführt sein. Eine Speicherung von Audiodaten auf dem Audiospeicher 5 wird über eine Bedienung eines Bedienelements 10 ausgelöst, das an einem Lenkrad 8 in einer gut greifbaren Position, bevorzugt jedoch außerhalb des äußeren Lenkradkranzes, angeordnet ist. Eine Betätigung des Bedienelements 10 wird über eine gestrichelt eingezeichnete Datenverbindung 11 an das Autoradio übertragen. In einer bevorzugten Ausgestaltung kann der Audiospeicher 5 aus dem Fahrzeug entnommen werden. Der Audiospeicher 5 kann dann gegebenenfalls mit einer anderen Wiedergabevorrichtung, z.B. einer Musikanlage, verbunden werden. Ferner kann der Audiospeicher 5 auch mit einer Recheneinheit zur Übertragung der gespeicherten Daten verbunden werden.

In einer ersten Ausführungsform wird bei einem Druck auf das Bedienelement 10 damit begonnen, zusätzlich zu der Audioausgabe über den Lautsprecher 4 ein über die Antennenvorrichtung 2 empfangenes Radioprogramm in dem Audiospeicher 5 zu speichern. Die Speicherung wird entweder fortgesetzt, bis der Audiospeicher 5 gefüllt ist oder bis eine erneute Betätigung des Bedienelements 10 erfolgt ist. In einer weiteren Ausführungsform kann der Audiospeicher 5 auch als ein First-In-First-Out-Speicher ausgeführt sein, bei dem der älteste Dateninhalt durch neu hinzugekommene Daten ersetzt wird.

In einer weiteren Ausführungsform kann durch das Bedienelement 10 auch ein Mikrofon 12 aktiviert werden, mit dem von dem Fahrer gesprochener Text aufgenommen und in den Audiospeicher 5 geschrieben wird. Die Aufnahme wird durch eine erneute Betätigung des Bedienelements 10 beendet. Gegebenenfalls kann mit einer Betätigung des Bedienelements auch zwischen einer Aufnahme von empfangenen Radiodaten und über das Mikrofon 12 gesprochenen Worten umgeschaltet werden.

In einer ersten Ausführungsform werden die Daten in dem Audiospeicher 5 unmittelbar als Audiodaten zur direkten Ausgabe über den Lautsprecher 4 gespeichert. In einer weiteren Ausführungsform können die Daten auch durch ein geeignetes Verfahren komprimiert in dem Audiospeicher 5 abgelegt werden. So ist es z.B. möglich, empfangene Audiodaten einer sogenannten MP3-Codierung zuzuführen und lediglich die codierten Daten in dem Audiospeicher 5 abzulegen. Hierfür ist eine in der Figur 1 nicht gezeigte Codiereinheit zur Komprimierung der Audiodaten vorgesehen.

Eine Wiedergabe der in dem Audiospeicher 5 gespeicherten Audiodaten erfolgt mittels eines ebenfalls an dem Lenkrad 15 des Fahrzeugs angeordneten Bedienelement oder über an dem Autoradio 1 angeordneten Bedienelementen.

Das Autoradio weist gegebenenfalls eine weitere Speichereinheit mit einem nicht überschreibbaren Datenträger auf, z.B. eine Compact Disc. Der nicht überschreibbare Speicher 13 enthält bevorzugt Musikdaten, die ebenfalls über den Lautsprecher 4 von dem Autoradio 1 ausgegeben werden können.

In der Figur 2 ist ein zweites Ausführungsbeispiel für ein Lenkrad 15 gezeigt, an dem eine Bedieneinheit 16 abnehmbar angeordnet ist. Die Bedieneinheit 16 verfügt über eine gestrichelt eingezeichnete Sendeeinheit 17, mittels der Befehle drahtlos, insbesondere über ein Funksignal, an das Autoradio 1 übertragen werden können. Somit ist die Bedieneinheit 16 als eine Fernbedienung des Autoradios 1 einsetzbar. Die Bedieneinheit 16 weist ein Bedienelement 10' zur Steuerung einer Aufnahme von Audiodaten gemäß dem Bedienelement 10 auf, das in der Figur 1 erläutert wurde. Gegebenenfalls kann die Bedieneinheit 16 weitere Bedienelemente 18 aufweisen, die bevorzugt zur Steuerung weiterer Funktionen des Autoradios dienen.

In einem in der Figur 2 nicht gezeigten Ausführungsbeispiel kann an dem Lenkrad 15 auch ein elektrischer Kontakt vorgesehen sein, über den Befehle von der Bedieneinheit 16 ausgelesen und über eine Drahtverbindung an das Autoradio 1 übertragen werden können. In diesem Fall enthält die Bedieneinheit 16 keine Fernbedienungsfunktion. Sie kann dann gegebenenfalls, um keinen Diebstahlsanreiz zu geben, trotzdem aus dem Lenkrad 15 entnommen werden.

Die Bedieneinheit 16 ist bevorzugt in einem Innenbereich des Lenkrads, bevorzugt an eine Querstrebe, bzw. an der Innenseite des Lenkradkranzes angeordnet. Durch diese Anordnung ist die Bedieneinheit 16 einschließlich der an ihr angeordneten Bedienelemente 10', 18 gut erreichbar, stört jedoch bei Lenkbewegungen des Lenkrades 15 nicht. Ferner ist es auch möglich, die Bedieneinheit 16 nachträglich, z.B. bei einem Einbau eines neuen Autoradios, an dem Lenkrad 15 anzubringen.

Das Bedienelement zur Steuerung der Aufnahme von Audiodaten ist bevorzugt so ausgeführt, dass eine irrtümliche Betätigung vermieden werden kann. In einer ersten Ausführungsform ist das Bedienelement so ausgeführt, dass es nicht über seine Umgebung an der Oberfläche des Lenkrads 8 bzw. der Bedieneinheit 16 hinausragt. Es ist dann erforderlich, dass ein Benutzer das Bedienelement tief in die Umgebung hineindrückt. In einer weiteren Ausführungsform kann es auch vorgesehen sein, dass eine Aufnahme erst dann gestartet wird, wenn das Bedienelement für eine Mindestzeit, z.B. 1s, betätigt wurde. Um eine irrtümliche Betätigung zu vermeiden, kann ferner vorgesehen sein, über dem Lautsprecher 4 eine akustische Rückmeldung an einen Fahrer zu geben, der dann durch einen Signalton darauf hingewiesen wird, dass eine Aufnahmefunktionalität des Autoradios aktiviert wurde.

## Patentansprüche

1. Bedienelement zur Steuerung einer Speicherung von Audiodaten durch ein Autoradio in einem Fahrzeug, **dadurch gekennzeichnet, dass** das Bedienelement (10, 10') an einem Lenkrad (8, 15) des Fahrzeugs angeordnet ist.

2. Bedienelement nach Anspruch 1, **dadurch gekennzeichnet, dass** durch eine Betätigung des Bedienelements (10, 10') ein empfangenes Radioprogramm in einer Speichereinheit (5) insbesondere komprimiert abgelegt wird.

3. Bedienelement nach einem der vorherigen Ansprüche, **dadurch gekennzeichnet, dass** mit einer Betätigung des Bedienelements (10, 10') über ein Mikrofon (12) empfangene Audiodaten gespeichert werden.

4. Bedienelement nach einem der vorherigen Ansprüche, **dadurch gekennzeichnet, dass** eine Speicherung von Audiodaten durch zwei aufeinanderfolgende Betätigungen des Bedienelements (10, 10') jeweils gestartet und beendet wird.

5. Bedieneinheit mit einem Bedienelement nach einem der vorherigen Ansprüche, **dadurch gekennzeichnet, dass** die Bedieneinheit (16) von dem Lenkrad (15) abnehmbar ist.

6. Bedieneinheit nach Anspruch 5, **dadurch gekennzeichnet, dass** die Bedieneinheit (16) eine Fernbedienung zur Steuerung des Autoradios (1) ist.

7. Bedieneinheit nach einem der Ansprüche 5 bis 6, **dadurch gekennzeichnet, dass** die Bedieneinheit (16) an einem Inneren eines Lenkradkranzes des Lenkrads (15) angeordnet ist.
